# EUROPÄISCHE PATENTANMELDUNG

(11) **EP 1 891 873 A2**
(43) Veröffentlichungstag der Anmeldung: **27.02.2008**
(21) Anmeldenummer: 07016518.8
(22) Anmeldetag: 23.08.2007
(51) Int. Cl.: A47B 13/06, F16B 12/40, A47B 17/00

(54) **Verbindungselement**

(30) Priorität: 23.08.2006 DE 102006039569
(71) Anmelder: VEYHL GmbH, D-75389 Neuweiler-Zwerenberg (DE)
(72) Erfinder: Bruder, Wolfgang, 72226 Simmersfeld (DE); Schober, Horst, 75389 Neuweiler (DE)
(74) Vertreter: Kohler Schmid Möbus

(57) **Zusammenfassung**

Vorgeschlagen wird ein Verbindungselement 2,3 zur Befestigung eines Horizontalelements 7,8 an einem Vertikalelement. Dabei weist das Horizontalelement 7,8 an einem freien Ende mindestens einen oberen Vorsprung 18 und mindestens einen unteren Vorsprung 17 auf, und am Vertikalelement 56 ist mindestens eine Einhaköffnung 20 zur Aufnahme des oberen Vorsprungs 18 des Horizontalelements 7,8 und mindestens ein horizontaler Vorsprung 25 zum vertikalen Abstützen des unteren Vorsprungs 17 des Horizontalelements 7,8 vorgesehen, wobei ein Verspannelement 30 mit Arretierungsmittein 32 zur horizontalen Sicherung des unteren Vorsprungs 17 des Horizontalelements 7,8 vorgesehen ist.

## Beschreibung

Die Erfindung betrifft ein Verbindungselement, bevorzugt von Systemmöbelelementen, zur Befestigung eines Horizontalelements an einem Vertikalelement. Derartige Verbindungselemente sind z.B. an Systemmöbeltischen, z.B. Bürotischen, vorgesehen, wobei das Vertikalelement von einem Tischbein und das Horizontalelement von einem den Systemmöbeltisch stabilisierenden Längsträger ausgebildet wird.

Derartige Verbindungselemente sind z.B. aus den Druckschriften EP 0 594 939 B1, EP 0 087 498 B1, EP 0 065 036 B1 und EP 0 164 041 B1 bekannt.

Bei bekannten Verbindungselementen werden die horizontal anzuordnenden Elemente (Horizontalelemente) üblicherweise mit den vertikal anzuordnenden Elementen (Vertikalelemente) z.B. verschraubt oder ineinander verhakt. Wenn die Elemente verschraubt werden, ist zwar eine stabile und spielfreie Verbindung gewährleistet, der Aufbau eines Systemmöbels mit derartigen Verschraubungen ist jedoch zeitaufwändig und kompliziert, da zu verwendende Schrauben erst nach einem exakten Positionieren der Elemente gegeneinander eingeschraubt werden können. Werden die Elemente ineinander verhakt, so ist zwar ein rascher Aufbau der Systemmöbel möglich, jedoch besteht häufig ein Spiel zwischen den ineinander verhakten Elementen, so dass derartig zusammengefügte Systemmöbel für einen Einsatz in Büros oder auf Ausstellungen nicht stabil genug sind.

Der Erfindung liegt die Aufgabe zugrunde, ein Verbindungselement, bevorzugt von Systemmöbelelementen, zur Befestigung eines Horizontalelements an einem Vertikalelement bereitzustellen, welches die Nachteile des Standes der Technik vermeidet, wobei insbesondere ein sehr schneller und stabiler Auf- und Abbau von Systemmöbeln ermöglicht werden soll.

Diese Aufgabe wird durch die Gegenstände der Patentansprüche gelöst. Die abhängigen Ansprüche stellen bevorzugte Ausführungsformen der Erfindung dar.

Ein erfindungsgemäßes Verbindungselement ist zur Befestigung eines Horizontalelements an einem Vertikalelement, insbesondere bei Systemmöbeln, deren Elemente meist aus Metall gefertigt sind, geeignet. Erfindungsgemäß weist dabei das Horizontalelement an einem freien Ende mindestens einen oberen und mindestens einen unteren Vorsprung auf. Unter Horizontalelement wird dabei verstanden, dass zumindest das frei Ende des Elements an dem die oberen und unteren Vorsprünge vorgesehen sind horizontal anzuordnen ist. Es kann sich dabei z.B. um einen Längsträger einer Tischunterkonstruktion (Traverse) oder auch um ein Tischbein mit seitlich herausstehendem freiem Ende handeln. Am Vertikalelement ist mindestens eine Einhaköffnung zur Aufnahme des oberen Vorsprungs des Horizontalelements und mindestens ein horizontaler Vorsprung zum vertikalen Abstützen des unteren Vorsprungs des Horizontalelements vorgesehen. Unter Vertikalelement wird dabei verstanden, dass zumindest der Bereich des Elements an dem die Einhaköffnung und der horizontale Vorsprung vorgesehen sind bei der Montage z.B. von Systemmöbeln, vertikal anzuordnen ist. Es kann sich dabei z.B. um ein Tischbein oder auch um einen Tischplattenträger handeln. Weiter ist ein Verspannelement mit Arretierungsmitteln zur horizontalen Sicherung des unteren Vorsprungs des Horizontalelements vorgesehen.
Mittels des erfindungsgemäßen Verbindungselements kann das Horizontalelement einfach und schnell am Vertikalelement positioniert werden. Dabei ist das Horizontalelement bereits nach dem Einhaken des oberen Vorsprungs in die Einhaköffnung des Vertikalelements und nach dem Abstützen des unteren Vorsprungs auf dem horizontalen Vorsprung standfest aufgebaut, wobei ein exaktes Positionieren der Elemente gegeneinander gewährleistet ist. Mittels der Arretiermittel wird eine Sicherung dieses Aufbaus erreicht, wobei zusätzlich eventuell vorhandenes Spiel zwischen den Vorsprüngen und der Einhaköffnung aufgehoben wird. Es ist so ein rascher und stabiler Aufbau von Systemmöbelelementen möglich.

Bevorzugt sind die Vorsprünge des Horizontalelements von einer am freien Ende des Horizontalelements befestigten, bevorzugt zu einer Horizontallinie symmetrischen, Platte (Adapterplatte) ausgebildet. Die Adapterplatte kann z.B. an dem Horizontalelement angeschweißt sein. Die Vorsprünge sind so sehr stabil und können praktisch nicht abbrechen oder verschleißen. Durch eine symmetrisch ausgebildete Adapterplatte kann das Horizontalelement in verschiedenen Positionen korrekt mit dem Vertikalelement verbunden werden.

Besonders bevorzugt weisen die Arretierungsmittel einen Excenterhebel oder einen Schraubbolzen auf. Damit lässt sich ein vorhandenes Spiel sicher reduzieren. Insbesondere ein Excenterhebel eignet sich besonders günstig zur raschen Montage, da ein derartiger Hebel einfach umgelegt werden muss, um die gewünschte Arretierung und eine Verminderung eines eventuell vorhandenen Spiels zu erreichen.

Wenn das Verspannelement und der untere Vorsprung des Horizontalelements zueinander korrespondierende, schräg zur Horizontalen verlaufende Anlageflächen aufweisen, über die die horizontale Sicherung des unteren Vorsprungs des Horizontalelements vornehmbar ist, wird beim Sichern des unteren Vorsprungs das Horizontalelement über die Anlageflächen in eine gewünschte Position geschoben. Das Verspannelement wirkt dann beim Sichern wie ein Keil.

Bevorzugt ist die Einhaköffnung von einem Spalt zwischen einer Außenwand des Vertikalelements und einem Anlagekörper im Vertikalelement zur horizontalen Anlage des freien Endes des Horizontalelements ausgebildet. Diese Ausführungsform eignet sich besonders gut zum Einhaken von von einer Adapterplatte ausgebildeten Vorsprüngen. Dabei stützt der Anlagekörper das freie Ende des Horizontalelements derart ab, dass der obere Vorsprung des Horizontalelements bereits lagefest mit der Außenwand verkantet. Die Breite des Spalts entspricht dabei der Stärke des oberen Vorsprungs, d.h. der Adapterplatte.

Wenn dabei der horizontale Vorsprung am Vertikalelement, d.h. der Vorsprung zum vertikalen Abstützen des unteren Vorsprungs des Horizontalelements, von einem unteren Ende des Anlagekörpers ausgebildet ist, ist eine besonders stabile Positionierung der Elemente gegeneinander mittels des erfindungsgemäßen Verbindungselements möglich, da lediglich zwei Teile, d.h. der Anlagekörper und das Horizontalelement, aneinander befestigt werden. Ein evtl. zwischen weiteren Teilen vorhandenes Spiel wird so vermieden.

Besonders bevorzugt sind die Arretierungsmittel durch bevorzugt eine Bohrung vertikal durch den Anlagekörper durchgeführt und von oben arretierbar. Auf diese Weise kann z.B. eine Unterkonstruktion eines Tisches oder einer Bühne zusammengebaut werden, ohne dass zur Arretierung der einzelnen Elemente gegeneinander nach Aufbau der Unterkonstruktion an der Unterkonstruktion von unten Manipulationen vorgenommen werden müssen. Z.B. kann dann einfach ein Excenterhebel von oben umgeklappt werden, um die Konstruktion zu sichern. Dadurch, dass die Arretierungsmittel durch den Anlagekörper durchgeführt sind, können die Arretierungsmittel, d.h. das gesamte Verspannelement, bereits unverlierbar am Vertikalelement montiert sein. Es müssen so nicht die einzelnen Teile der Verspannelemente gesondert vorgehalten werden.

Sehr vorteilhaft sind jeweils zwei erfindungsgemäße Verbindungselemente symmetrisch zu einer Mittelebene des Vertikalelements an einem Vertikalelement angeordnet. Derart wird ein Verbindungssystem ausgebildet, wobei eine Kette von Horizontalelementen mit jeweils dazwischen positionierten Vertikalelementen aufgebaut werden kann. Es kann so z.B. eine Tischunterkonstruktion beliebiger Länge montiert werden. Dabei sind die Horizontalelemente ebenfalls symmetrisch ausgebildet, d.h. sie weisen an einem weiteren freien Ende mindestens einen weiteren oberen und unteren Vorsprung, bevorzugt eine weitere Adapterplatte, auf.

Bei einem derartigen erfindungsgemäßen Verbindungssystem sind bevorzugt die Arretiermittel beider Verbindungselemente und/oder der Anlagekörper beider Verbindungselemente als jeweils ein Bauteil ausgeführt. Wenn die Anlagekörper beider Verbindungselemente als ein einziges Bauteil ausgebildet sind, wird gegenüber einer Ausführung von zwei einzelnen Anlagekörpern ein Spiel zwischen den Elementen der Verbindungselemente verringert. Besonders vorteilhaft ist die Ausbildung der Arretiermittel als ein einziges Bauteil, da derart durch Arretieren dieses einzelnen Bauteils beide Verbindungen gesichert werden können.

Ein erfindungsgemäßes Systemmöbelelement weist mindestens ein erfindungsgemäßes Verbindungselement und/oder mindestens ein erfindungsgemäßes Verbindungssystem auf. Bevorzugt ist ein erfindungsgemäßes Systemmöbelelement als Unterbau eines Systemmöbeltisches ausgebildet. Die Vertikalelemente sind dabei als Tischbeine mit Tischplattenträgern und Fußteilen ausgebildet und die Horizontalelemente sind dabei als jeweils zwei Tischbeine verbindende Längsträger ausgebildet. Derartige Systemmöbeltische sind besonders zum Einsatz bei Messen oder Ausstellungen geeignet, wo ein rasches und sicheres Auf- und Abbauen der Systemmöbeltische notwendig ist.

Die Erfindung wird nachfolgend anhand eines Ausführungsbeispiels unter Bezugnahme auf die Zeichnungen näher erläutert.

Die Figuren 1 zeigen ein erfindungsgemäßes Verbindungssystem.

Die Figuren 2 zeigen den Ablauf der Arretierung eines erfindungsgemäßen Verbindungselements.

Figur 3 zeigt Tischbeine und Längsträger eines erfindungsgemäßen Systemmöbeltischunterbaus.

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

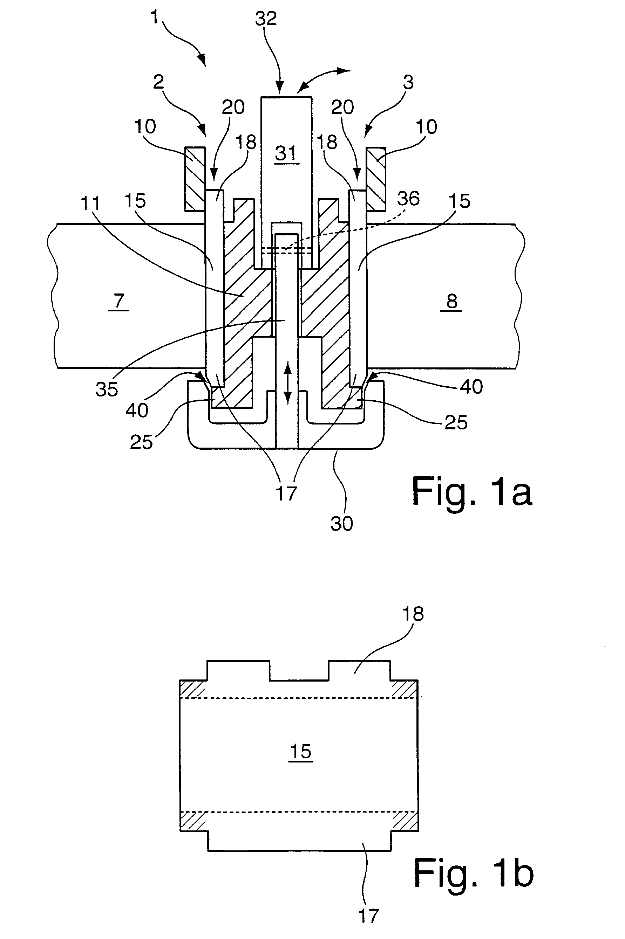

In den Figuren 1 ist ein erfindungsgemäßes Verbindungssystem 1 mit zwei erfindungsgemäßen Verbindungselementen 2,3, die symmetrisch zu einer Mittelebene eines Vertikalelements angeordnet sind, gezeigt. An dem Vertikalelement ist über jeweils eines der Verbindungselemente 2,3 jeweils ein Horizontalelement 7,8 montiert. Figur 1a zeigt ein Schnittbild senkrecht zu der Mittelebene des Vertikalelements durch das erfindungsgemäße Verbindungssystem 1. Vom Vertikalelement ist daher lediglich ein Teil seiner Außenwand 10 und ein Anlagekörper 11 dargestellt. Figur 1b zeigt eine Draufsicht auf eine an jeweils den freien Enden der Horizontalelemente 7,8 angeschweißte Adapterplatte 15. Derartige Adapterplatten 15 bilden jeweils obere und untere Vorsprünge 17,18 an den freien Enden der Horizontalelemente 7,8 aus. Die Adapterplatte 15 besteht aus einer Metallplatte. Die Verbindungselemente 2,3 weisen jeweils eine als ein Spalt ausgebildete Einhaköffnung 20 zur Aufnahme der oberen Vorsprünge 18 jeweils einer Adapterplatte 15 auf. Diese Spalten werden von jeweils einem Zwischenraum zwischen jeweils einer Außenwand 10 des Vertikalelements und dem im Vertikalelement angeordneten Anlagekörper 11 zur horizontalen Anlage (Anlagefläche) der Adapterplatten 15, die an den freien Enden der jeweils zu montierenden Horizontalelemente 7,8 angeschweißt sind, ausgebildet. Die Spaltbreite entspricht dabei der Stärke der Adapterplatten 15. Der dargestellte Anlagekörper 11 bildet für beide Verbindungselemente 2,3 eine entsprechende Anlagefläche aus, d.h. die Anlagekörper der beiden Verbindungselemente sind als ein einziges Bauteil ausgeführt. Zum vertikalen Abstützen der von den Adapterplatten 15 ausgebildeten unteren Vorsprünge 17 der Horizontalelemente 7,8 ist von jeweils einem unteren Ende des Anlagekörpers 11 jeweils ein horizontaler Vorsprung 25 ausgebildet, so dass die unteren Enden L-förmig ausgeformt sind. Mittels eines Verspannelements 30 sind die unteren Vorsprünge 17 der Horizontalelemente 7,8 gegen eine horizontale Verschiebung in ihrer vertikal abgestützten Position gesichert. Das Verspannelement 30 ist mittels einen Excenterhebel 31 aufweisenden Arretierungsmitteln 32 derart fixiert, dass die Elemente der Verbindungselemente 2,3 spielfrei gegeneinander gesichert sind. Das Verspannelement 30 ist ebenfalls symmetrisch ausgebildet, so dass es als Verspannelement beider Verbindungselemente 2,3 des dargestellten Verbindungssystems 1 dient. Dabei sind die Arretiermittel 32 der Verbindungselemente 2,3 als ein einziger Zugbolzen 35 mit einem Excenterhebel 31 ausgeführt, wobei der Zugbolzen 35 durch eine entlang der Mittelsenkrechten des Anlagekörpers 11 vertikal verlaufende Bohrung durch den Anlagekörper 11 durchgeführt ist. Der Excenterhebel 31 ist über einen Sicherungsbolzen 36 am Zugbolzen 35 angelenkt und von oben arretierbar. Durch Umlegen des Excenterhebels 31 wird das Verspannelement 30 mittels des Zugbolzens 35 nach oben gezogen und an die unteren Vorsprünge 17 der Horizontalelemente 7,8 gedrückt. Das Umlegen des Excenterhebels 31 ist in der Figur durch einen gebogenen Doppelpfeil symbolisiert. Das nach oben ziehen des Verspannelements 30 ist in der Figur durch einen Doppelpfeil im Zugbolzen symbolisiert. Die unteren Vorsprünge 17 der Horizontalelemente 7,8 und das Verspannelement 30 weisen dazu schräg zur Horizontalen verlaufende Anlageflächen 40 auf. Die unteren Vorsprünge 17 verjüngen sich also konisch. Wird der Excenterhebel 31 umgelegt, werden die zueinander gehörenden Anlageflächen 40 zur horizontalen Sicherung der Horizontalelemente 7,8 gegeneinander gedrückt und über die schräg verlaufenden Anlageflächen 40 in eine spielfreie Position geschoben. Wird eine Anlageplatte 15 auf den Anlagekörper 11 (Außenwand 10, Vorsprung 25) eingeschwenkt, so entsteht eine formschlüssige Verbindung, die auch torsionsstabil ist.

Bei der in Figur 1b dargestellten Adapterplatte 15 sind die Anlageflächen schraffiert eingezeichnet. Diese Anlageflächen erzeugen nach der Montage (Aktivierung des Verspannelements) eines Horizontalelements 7,8 an einem Vertikalelement eine kraftschlüssige Verbindung mit dem Vertikalelement. Die durch eine symbolische gestrichelte Linie von der restlichen Adapterplatte in Figur 1b abgegrenzt dargestellten Vorsprünge 17, 18 können wie dargestellt Kantenlinien mit Ausschnitten ausbilden. Die Einhaköffnungen 20 und die Form der unteren Vorsprünge 25 am Vertikalelement sind dann entsprechend ausgebildet. Dadurch kann eine weitere Positionierung der Horizontalelemente 7,8 am Vertikalelement vorgegeben werden.

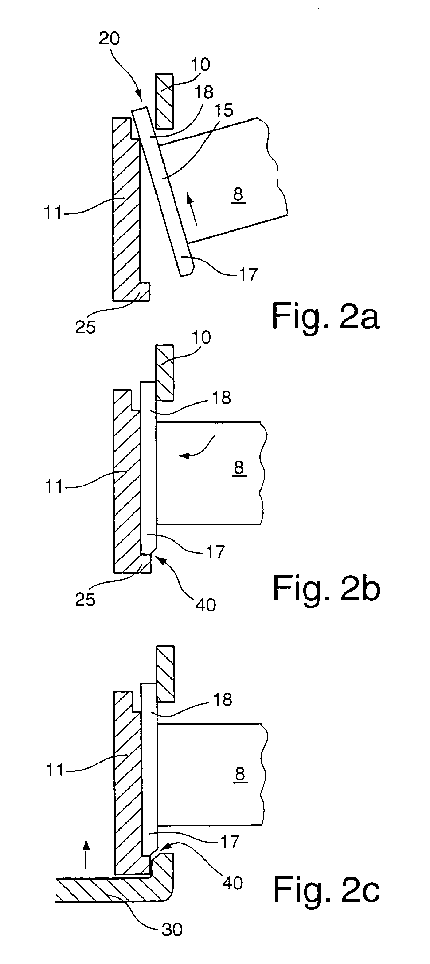

In den Figuren 2 ist der Ablauf der Arretierung eines erfindungsgemäßen Verbindungselements bei der Montage eines Horizontalelements 8 an einem Vertikalelement gezeigt. Zunächst wird, wie in Figur 2a dargestellt, der obere Vorsprung 18 der an einem freien Ende des Horizontalelements 8 befestigten Adapterplatte 15 in die Einhaköffnung 20 am Vertikalelement eingehakt, was in Figur 2a durch einen Pfeil symbolisiert ist. Darauf folgend wird das Horizontalelement 8 um die Einhaköffnung 20 als Drehzentrum nach unten abgesenkt, d.h. eingeschwenkt, bis die Adapterplatte 15 am Anlagekörper 11 des Vertikalelements anliegt, was in Figur 2b durch einen Pfeil symbolisiert ist. Um die Drehung zu erleichtern ist der Anlagekörper 11 im Bereich der Einhaköffnung 20 gegenüber der Außenwand 10 des Vertikalelements zurückversetzt ausgeformt. Nach dem Absenken liegt, wie in Figur 2b dargestellt, der untere Vorsprung 17 der Adapterplatte 15 auf dem vom unteren Ende des Anlagekörpers ausgebildeten horizontalen Vorsprung 25 auf. Wie in Figur 2c mittels eines Pfeils dargestellt, wird daraufhin das Verspannelement 30 mittels nicht dargestellter Arretierungsmittel nach oben gezogen. Die schräg verlaufenden Anlageflächen 40 des Verspannelements 30 und des unteren Vorsprunges 17 werden so gegeneinander gedrückt, was zu einer horizontalen spielfreien Sicherung des unteren Vorsprunges 17 des Horizontalelements 8 führt.

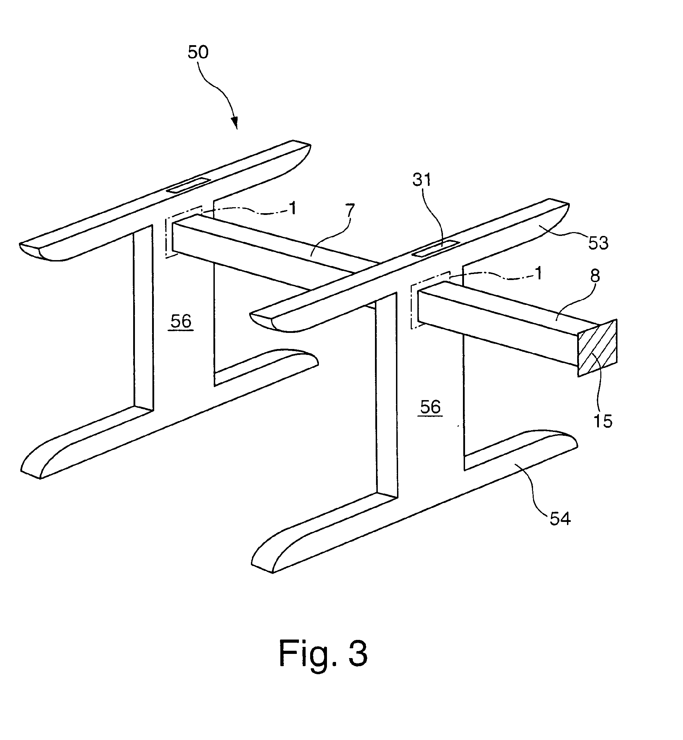

In Figur 3 ist eine Abfolge von Tischbeinen und Längsträgern eines Systemmöbelelements 50, nämlich eines Unterbaus, von erfindungsgemäßen Systemmöbeltischen gezeigt. An den als Tischbeine mit Tischplattenträgern 53 und Fußteilen 54 ausgebildeten Vertikalelementen 56 ist jeweils ein erfindungsgemäßes Verbindungssystem 1 vorgesehen, das in der Figur durch ein gestrichelt gezeichnetes Viereck symbolisiert ist. Die als Längsträger ausgebildeten Horizontalelemente 7,8 weisen an ihren freien Enden jeweils eine Adapterplatte 15 auf, mittels derer sie über erfindungsgemäße Verbindungselemente an den Tischbeinen befestigt sind. An der zur Auflage einer Tischplatte vorgesehenen Oberfläche der Tischbeine, bzw. deren Tischplattenträgern 53, ist jeweils ein umgeklappter Excenterhebel 31 eingezeichnet.

Vorgeschlagen wird ein Verbindungselement 2,3 zur Befestigung eines Horizontalelements 7,8 an einem Vertikalelement. Dabei weist das Horizontalelement 7,8 an einem freien Ende mindestens einen oberen Vorsprung 18 und mindestens einen unteren Vorsprung 17 auf, und am Vertikalelement 56 ist mindestens eine Einhaköffnung 20 zur Aufnahme des oberen Vorsprungs 18 des Horizontalelements 7,8 und mindestens ein horizontaler Vorsprung 25 zum vertikalen Abstützen des unteren Vorsprungs 17 des Horizontalelements 7,8 vorgesehen, wobei ein Verspannelement 30 mit Arretierungsmitteln 32 zur horizontalen Sicherung des unteren Vorsprungs 17 des Horizontalelements 7,8 vorgesehen ist.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Verbindungselement (2,3) zur Befestigung eines Horizontalelements (7,8) an einem Vertikalelement (56),
**dadurch gekennzeichnet, dass**
das Horizontalelement (7,8) an einem freien Ende mindestens einen oberen Vorsprung (18) und mindestens einen unteren Vorsprung (17) aufweist, und
am Vertikalelement (56) mindestens eine Einhaköffnung (20) zur Aufnahme des oberen Vorsprungs (18) des Horizontalelements (7,8) und mindestens ein horizontaler Vorsprung (25) zum vertikalen Abstützen des unteren Vorsprungs (17) des Horizontalelements (7,8) vorgesehen ist, und wobei
ein Verspannelement (30) mit Arretierungsmitteln (32) zur horizontalen Sicherung des unteren Vorsprungs (17) des Horizontalelements (7,8) vorgesehen ist.

2. Verbindungselement nach Anspruch 1,
**dadurch gekennzeichnet, dass**
die Vorsprünge (17,18) des Horizontalelements (7,8) von einer am freien Ende des Horizontalelements (7,8) befestigten, bevorzugt symmetrischen, Platte (15) ausgebildet sind.

3. Verbindungselement nach einem der Ansprüche 1 bis 2,
**dadurch gekennzeichnet, dass**
die Arretierungsmittel (32) einen Excenterhebel (31) oder einen Schraubbolzen aufweisen.

4. Verbindungselement nach einem der Ansprüche 1 bis 3,
**dadurch gekennzeichnet, dass**
das Verspannelement (30) und der untere Vorsprung (17) des Horizontalelements (7,8) zueinander korrespondierende, schräg zur Horizontalen verlaufende Anlageflächen (40) aufweisen, über die die horizontale Sicherung des unteren Vorsprungs (17) des Horizontalelements (7,8) vornehmbar ist.

5. Verbindungselement nach einem der Ansprüche 1 bis 4,
**dadurch gekennzeichnet, dass**
die Einhaköffnung (20) von einem Spalt zwischen einer Außenwand (10) des Vertikalelements (56) und einem Anlagekörper (11) im Vertikalelement (56) zur horizontalen Anlage des freien Endes des Horizontalelements (7,8) ausgebildet ist.

6. Verbindungselement nach Anspruch 5,
**dadurch gekennzeichnet, dass**
der horizontale Vorsprung (25) am Vertikalelement (56) von einem unteren Ende des Anlagekörpers (11) ausgebildet ist.

7. Verbindungselement nach einem der Ansprüche 5 bis 6,
**dadurch gekennzeichnet, dass**
die Arretierungsmittel (32) durch bevorzugt eine Bohrung vertikal durch den Anlagekörper (11) durchgeführt sind und von oben arretierbar sind.

8. Verbindungssystem (1) mit zwei Verbindungselementen (2,3) nach einem der Ansprüche 1 bis 7,
**dadurch gekennzeichnet, dass**
die Verbindungselemente (2,3) symmetrisch zu einer Mittelebene des Vertikalelements (56) angeordnet sind.

9. Verbindungssystem nach Anspruch 8,
**dadurch gekennzeichnet, dass**
die Arretiermittel (32) beider Verbindungselemente (1,2) und/oder der Anlagekörper (11) beider Verbindungselemente (1,2) als jeweils ein Bauteil ausgeführt sind.

10. Systemmöbelelement (50) mit mindestens einem Verbindungselement (2,3) nach einem der Ansprüche 1 bis 7 und/oder mindestens einem Verbindungssystem (1) nach einem der Ansprüche 8 bis 9.

11. Systemmöbeltisch mit mindestens einem Systemmöbelelement (50) nach Anspruch 10,
**dadurch gekennzeichnet, dass**
die Vertikalelemente (56) als Tischbeine mit Tischplattenträgern (53) und Fußteilen (54) ausgebildet sind und die Horizontalelemente (7,8) als jeweils zwei Tischbeine verbindende Längsträger ausgebildet sind.
